# EUROPEAN PATENT APPLICATION

(11) **EP 4 722 948 A1**
(43) Date of publication of application: **08.04.2026**
(21) Application number: 24838531.2
(22) Date of filing: 17.06.2024
(51) Int. Cl.: G06F 17/16

(54) **METHOD FOR DETERMINING ASSOCIATION RELATIONSHIP BETWEEN ROAD ELEMENTS, RELATED SYSTEM, AND STORAGE MEDIUM**

(30) Priority: 11.07.2023 CN 202310848736
(71) Applicant: Huawei Technologies Co., Ltd., Shenzhen, Guangdong 518129 (CN)
(72) Inventor: CHEN, Zhe, Shenzhen, Guangdong 518129 (CN); LIU, Zhenbo, Shenzhen, Guangdong 518129 (CN); WANG, Yong, Shenzhen, Guangdong 518129 (CN); WEN, Feng, Shenzhen, Guangdong 518129 (CN)
(74) Representative: MERH-IP Matias Erny Reichl Hoffmann Patentanwälte PartG mbB
(86) International application number: PCT/CN2024/099570
(87) International publication number: WO 2025/011273

(57) **Abstract**

Embodiments of this application provide a method for determining an association relationship between road elements, a related system, and a storage medium. The method may include: obtaining road perception element information and road prior element information; processing the road perception element information and the road prior element information to obtain a first feature vector and a second feature vector; and obtaining an association relationship between road perception elements and/or an association relationship between the road perception element and a road prior element based on the first feature vector and the second feature vector. In this manner, a current road element is associated with road prior information, so that the road prior information can serve as a bridge to improve a current road element relationship inference level. In addition, a redundant relationship can be constructed through inference of a relationship between the current road element and prior road information, to facilitate verification of a current road element relationship, thereby enhancing robustness and interpretability of an overall solution.

## Description

This application claims priority to Chinese Patent Application No. 202310848736.3, filed with the China National Intellectual Property Administration on July 11, 2023, and entitled "METHOD FOR DETERMINING ASSOCIATION RELATIONSHIP BETWEEN ROAD ELEMENTS, RELATED SYSTEM, AND STORAGE MEDIUM", which is incorporated herein by reference in its entirety.

### TECHNICAL FIELD

This application relates to the field of intelligent driving technologies, and in particular, to a method for determining an association relationship between road elements, a related system, and a storage medium.

### BACKGROUND

Automated driving requires road structure information to perform ego-vehicle planning and control, and assist in prediction of road participants. Conventionally, the road structure information is stored in a high-definition map. In addition to geometric information of a lane and a road, the road structure information further includes a plurality of association relationships between the lane and a traffic light, a road surface marking, a zebra crossing, and another lane. While the vehicle is traveling, rules that the vehicle needs to follow need to be determined based on association relationships between the lane and other rule-related information. An example is a lane speed limit and turn information. Another example is which traffic light applies to a lane used by the vehicle, and both a straight-ahead light and a left-turn light may need to be observed for a left-turn lane.

Conventionally, such association relationships may be obtained through a high-definition map. However, high-definition map production is complex. First, data collection for a high-definition map relies on expensive collection devices. Second, a high-definition map production procedure is complex, and still requires a large amount of manual participation in numerous cases. As a result, the current high-definition map production is slow and has an extremely limited coverage area, with road scene changes not updated in a timely manner. In addition, use of a high-definition map during automated driving requires highly accurate positioning information. When an accidental deviation occurs in a positioning module for automated driving, it may cause an error in loading the high-definition map and result in a serious accident. A limited present situation of high-definition maps restricts the application scope of higher-level automated driving. This encourages development of high-definition map production and development of real-time road structure cognition.

Road structure cognition analyzes collected data from vehicle-mounted sensors in real time to complete reconstruction of road conditions surrounding an ego vehicle, which can greatly expand the application boundaries of advanced automated driving. Currently, a large quantity of solutions focus only on reconstruction of geometric information on the road. Over the past two years, some studies have started to focus on parsing lane topology, but few studies have paid attention to the further need to parse association relationships between various elements on the road. In addition, limited by detection accuracy of the geometric information, inference for the relationships between the road elements is difficult.

### SUMMARY

This application discloses a method for determining an association relationship between road elements, a related system, and a storage medium, to improve a current road element relationship inference level.

According to a first aspect, an embodiment of this application provides a method for determining an association relationship between road elements. The method may include:
obtaining road perception element information and road prior element information;
processing the road perception element information and the road prior element information to obtain a first feature vector and a second feature vector; and
obtaining an association relationship between road perception elements and/or an association relationship between the road perception element and a road prior element based on the first feature vector and the second feature vector.

In this embodiment of this application, the road perception element information and the road prior element information is processed to obtain the first feature vector and the second feature vector, and then the association relationship between the road perception elements and/or the association relationship between the road perception element and the road prior element are/is obtained based on the first feature vector and the second feature vector. In this manner, a current road element is associated with road prior information, so that the road prior information can serve as a bridge to improve a current road element relationship inference level. In addition, a redundant relationship can be constructed through inference of a relationship between the current road element and prior road information, to facilitate verification of a current road element relationship, thereby enhancing robustness and interpretability of an overall solution.

This solution does not strongly rely on the road prior information for relationship inference. According to a requirement, a final output may be only an association between current road elements, to avoid adverse impact caused by outdated road prior information.

The road perception element information may be understood as real-time information about elements such as a road. The road perception element information may include one or more of the following element information: a lane, a road, a traffic light, a road surface marking, a zebra crossing, a road boundary line, an intersection, a sign, and the like. Certainly, the road perception element information may alternatively be other element information. This is not limited in this solution.

The road prior element information may be understood as known information about elements such as a road.

In a possible implementation, a vehicle may obtain the road perception element information from, for example, sensors such as a roadside apparatus, a vehicle camera, a radar, and/or the like. The vehicle may obtain the road prior element information from, for example, a user input or a map (for example, a standard-definition map (Standard-definition map, SD map) or a navigation map). Certainly, there may alternatively be another way. This is not limited in this solution.

For example, the vehicle obtains the road perception element information from a perception module, and obtains the road prior element information from the navigation map.

In a possible implementation, processing the road perception element information and the road prior element information to obtain the first feature vector and the second feature vector includes:
separately performing feature extraction on the road perception element information and the road prior element information to obtain the first feature vector and the second feature vector, where the first feature vector is a road perception element feature vector, and the second feature vector is a road prior element feature vector.

For example, feature extraction is performed on the road perception element information to obtain the road perception element feature vector. Feature extraction is performed on the road prior element information to obtain the road prior element feature vector.

In another possible implementation, processing the road perception element information and the road prior element information to obtain the first feature vector and the second feature vector includes:
performing feature interaction processing on the road perception element information and the road prior element information to obtain the first feature vector and the second feature vector, where the first feature vector is a fused road perception element feature vector, and the second feature vector is a fused road prior element feature vector.

The fused road perception element feature vector may be understood as a road perception element feature vector obtained by implicitly considering impact of the road prior element information. Certainly, the fused road perception element feature vector may further include fusion of the road perception element information, and the like. This is not limited in this solution.

Correspondingly, the fused road prior element feature vector may be understood as a road prior element feature vector obtained by implicitly considering impact of the road perception element information. Certainly, the fused road prior element feature vector may further include fusion of the road prior element information, and the like.

The feature interaction processing may be understood as that the road prior element information is also referred to in a process of performing feature extraction on the road perception element information, and correspondingly, the road perception element information is also referred to in a process of performing feature extraction on the road prior element information.

In a possible implementation, performing feature interaction processing on the road perception element information and the road prior element information to obtain the first feature vector and the second feature vector includes:
performing multi-head attention mechanism processing on the road perception element information and the road prior element information to obtain the fused road perception element feature vector and the fused road prior element feature vector.

In another possible implementation, performing feature interaction processing on the road perception element information and the road prior element information to obtain the first feature vector and the second feature vector includes:
performing interactive fusion on elements whose distances are less than a preset distance based on at least one of location information, category information, direction information, and attribute information of different elements in the road perception element information and the road prior element information to obtain the fused road perception element feature vector and the fused road prior element feature vector.

For example, interactive fusion is performed on a road surface marking feature and a lane feature to obtain a lane description with marking information. For another example, co-directional lanes are combined to form a road-level feature description.

The distance may be understood as a correlation degree indicated by the information, and is not only a geographical distance in a conventional sense or the like. In this example, the distance is used as a selection condition, and certainly, another condition may alternatively be used. This is not limited in this solution.

This solution may be implemented through rule constraint. A key feature of the road element is extracted based on a manually defined rule, a matching strategy is constructed to calculate the association relationship, and a final relationship is verified and output based on a rule transfer method.

In a possible implementation, obtaining the association relationship between the road perception elements and/or the association relationship between the road perception element and the road prior element based on the first feature vector and the second feature vector includes:
constructing a matching cost function based on the fused road perception element feature vector and the fused road prior element feature vector; and
obtaining the association relationship between the road perception elements and/or the association relationship between the road perception element and the road prior element based on the matching cost function.

For example, the matching cost function may be a function constrained by the distance, an orientation, a category, and the like. This is not limited in this solution. If a constructed association relationship constraint is satisfied, there is a relationship between the elements. If a constructed association relationship constraint is not satisfied, there is no relationship between the elements. For example, a matching cost function is constructed based on various obtained road perception element information, road prior element information, fused road perception element feature vectors, and fused road prior element feature vectors, to determine an association relationship between perception elements and an association relationship between the perception element and prior information based on the matching cost function. For example, to associate a perceived lane with a road from an SD map, the perceived lane and the road from the SD map need to be close in geometric locations and indicate similar traveling directions. For another example, to associate a perceived lane with a perceived traffic light, a traveling direction of the perceived lane needs to point toward a location of the traffic light, and the traffic light needs to face the lane.

In a possible implementation, the method further includes:
combining and/or deleting a redundant association relationship between the road perception elements to obtain a processed association relationship between the road perception elements; and
combining and/or deleting a redundant association relationship between the road perception element and the road prior element to obtain a processed association relationship between the road perception element and the road prior element.

In this way, the association relationship between the road perception elements and the association relationship between the road perception element and the road prior element can be simplified, so that an obtained association relationship result is clearer, more concise, and more accurate.

According to a second aspect, an embodiment of this application provides an apparatus for determining an association relationship between road elements, including:
an obtaining module, configured to obtain road perception element information and road prior element information;
a processing module, configured to process the road perception element information and the road prior element information to obtain a first feature vector and a second feature vector; and
a determining module, configured to obtain an association relationship between road perception elements and/or an association relationship between the road perception element and a road prior element based on the first feature vector and the second feature vector.

In a possible implementation, the processing module is configured to:
separately perform feature extraction on the road perception element information and the road prior element information to obtain the first feature vector and the second feature vector, where the first feature vector is a road perception element feature vector, and the second feature vector is a road prior element feature vector.

In another possible implementation, the processing module is configured to:
perform feature interaction processing on the road perception element information and the road prior element information to obtain the first feature vector and the second feature vector, where the first feature vector is a fused road perception element feature vector, and the second feature vector is a fused road prior element feature vector.

In a possible implementation, the processing module is further configured to:
perform multi-head attention mechanism processing on the road perception element information and the road prior element information to obtain the fused road perception element feature vector and the fused road prior element feature vector.

In another possible implementation, the processing module is further configured to:
perform interactive fusion on elements whose distances are less than a preset distance based on at least one of location information, category information, direction information, and attribute information of different elements in the road perception element information and the road prior element information to obtain the fused road perception element feature vector and the fused road prior element feature vector.

In a possible implementation, the processing module is further configured to:
construct a matching cost function based on the fused road perception element feature vector and the fused road prior element feature vector; and
obtain the association relationship between the road perception elements and/or the association relationship between the road perception element and the road prior element based on the matching cost function.

In a possible implementation, the determining module is further configured to:
combine and/or delete a redundant association relationship between the road perception elements to obtain a processed association relationship between the road perception elements; and
combine and/or delete a redundant association relationship between the road perception element and the road prior element to obtain a processed association relationship between the road perception element and the road prior element.

According to a third aspect, an embodiment of this application provides an apparatus for determining an association relationship between road elements, including a processor and a memory. The memory is configured to store program code, and the processor is configured to invoke the program code to perform the method according to any one of the possible implementations of the first aspect.

According to a fourth aspect, an embodiment of this application provides a computer-readable storage medium. The computer-readable storage medium stores a computer program, and the computer program is executed by a processor to perform the method according to any one of the possible implementations of the first aspect.

According to a fifth aspect, an embodiment of this application provides a computer program product. When the computer program product runs on a computer, the computer is enabled to perform the method according to any one of the possible implementations of the first aspect.

According to a sixth aspect, an embodiment of this application provides a vehicle. The vehicle includes the apparatus according to any one of the possible implementations of the second aspect.

It may be understood that the apparatus according to the second aspect, the apparatus according to the third aspect, the computer storage medium according to the fourth aspect, the computer program product according to the fifth aspect, or the vehicle according to the sixth aspect is configured to perform the method according to any one of the possible implementations of the first aspect. Therefore, for beneficial effect that can be achieved by the apparatus according to the second aspect, the apparatus according to the third aspect, the computer storage medium according to the fourth aspect, the computer program product according to the fifth aspect, or the vehicle according to the sixth aspect, refer to the beneficial effect in the corresponding method. Details are not described herein again.

### BRIEF DESCRIPTION OF DRAWINGS

The following describes the accompanying drawings used in embodiments of this application.
FIG. 1 is a diagram of an architecture of a system for determining an association relationship between road elements according to an embodiment of this application;
FIG. 2a is a schematic flowchart of a method for determining an association relationship between road elements according to an embodiment of this application;
FIG. 2b is a diagram of obtaining data according to an embodiment of this application;
FIG. 2c is another diagram of obtaining data according to an embodiment of this application;
FIG. 3 is a diagram of another method for determining an association relationship between road elements according to an embodiment of this application;
FIG. 4 is a diagram of a structure of an apparatus for determining an association relationship between road elements according to an embodiment of this application; and
FIG. 5 is a diagram of a structure of another apparatus for determining an association relationship between road elements according to an embodiment of this application.

### DESCRIPTION OF EMBODIMENTS

It should be noted that prefix words such as "first" and "second" are used in this application only to distinguish between different described objects, and do not constitute any limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether the "field" modified by "first" and the "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words for distinguishing between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of al, a2, ..., and an" is used, including a case in which any one of al, a2, ..., and an exists alone, and also including a case of any combination of any plurality of al, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

Automated driving may also be referred to as intelligent driving or assisted driving, and is an important direction of intelligent development of vehicles. With development of sensing technologies and improvement of chip capabilities, intelligent driving provides more abundant driving functions for people, and gradually implements driving experience of different levels. The society of automotive engineers (society of automotive engineers, SAE) provides a driving automation level standard, including driving levels L0 to L5. The level L0 is no automation. A human driver is fully responsible for operating a vehicle. In a traveling process, a warning or assistance may be obtained from a driving system, for example, autonomous emergency braking (autonomous emergency braking, AEB), blind spot monitoring (blind spot monitoring, BSM), or lane departure warning (lane departure warning, LDW). A level L1 is driving support. A driving operation is jointly performed by a human driver and a driving system, the driving system may provide driving support for a steering wheel or an acceleration or deceleration operation based on a driving environment, and another driving operation is performed by the human driver, for example, adaptive cruise control (adaptive cruise control, ACC) or lane keep assistance/support (lane keep assistance/support, LKA/LKS). A level L2 is partial automation. Driving support is provided for a plurality of a steering wheel and an acceleration or deceleration operation based on a driving environment, and another driving action is performed by a human driver, for example, a vehicle following function that combines adaptive cruise control (adaptive cruise control, ACC) and lane keep assistance (lane keep assistance, LKA). A level L3 is conditional automation. A driving system may complete all driving operations. However, a human driver needs to respond to a request of the driving system at appropriate time, that is, the human driver needs to be ready to take over the driving system. A level L4 is high automation. A driving system may complete all driving operations, and a human driver does not necessarily need to respond to a request of the driving system. For example, when road and environment conditions permit (for example, a closed campus, a highway, an urban road, or a fixed driving path), the human driver may not take over driving. The level L5 is full automation. A driving system may independently complete driving operations under various road and environment conditions that can be handled by a human driver. It can be learned that, at the levels L0 to L2, the driving system mainly provides support for the driver, and the driver still needs to perform driving supervision, and perform steering, braking, or acceleration as required, to ensure safety. At the levels L3 to L5, the driving system can replace the driver to complete all the driving operations. At the level L3, the driver needs to be ready to take over driving. At the levels L4 and L5, the driving system can implement full driving under some or all conditions. The driver may choose whether to take over driving.

The foregoing levels are an example. With technology evolution or different regulations in different countries or regions, the foregoing levels may change. For example, the vehicle automation levels proposed by the Ministry of Industry and Information Technology of China includes six levels of vehicle driving automation, where levels 0 to 2 are driver assistance, a system assists a human in performing a dynamic driving task, and a driving subject is still a driver; and levels 3 to 5 are automated driving, a system performs a dynamic driving task in place of a human in an operational design condition, and a driving subject is the system when a function is activated. Names and definitions of the levels are as follows: A level-0 driving automation (emergency assistance, emergency assistance) system cannot continuously perform horizontal or vertical motion control on a vehicle in a dynamic driving task, but has a capability of continuously detecting and responding to some targets and events in the dynamic driving task. A level-1 driving automation (partial driver assistance, partial driver assistance) system continuously performs horizontal or vertical motion control on a vehicle in a dynamic driving task under an operational design condition (or referred to as an operational design domain ODD) of the system, and has a capability of detecting and responding to some targets and events that adapt to the horizontal or vertical motion control performed on the vehicle. A level-2 driving automation (combined driver assistance, combined driver assistance) system continuously performs horizontal and vertical motion control on a vehicle in a dynamic driving task under an operational design condition of the system, and has a capability of detecting and responding to some targets and events that adapt to the horizontal and vertical motion control performed on the vehicle. A level-3 driving automation (conditionally automated driving, conditionally automated driving) system continuously executes all dynamic driving tasks under an operational design condition. A level-4 driving automation (highly automated driving, highly automated driving) system continuously executes all dynamic driving tasks and automatically performs a minimum risk strategy under an operational design condition of the system. A level-5 driving automation (fully automated driving, fully automated driving) system continuously executes all dynamic driving tasks and automatically performs a minimum risk strategy under any traveling condition. The horizontal control is mainly used for vehicle steering control, for example, controlling torque or an angle of a steering wheel to control a direction of the vehicle. The vertical control is mainly used for vehicle speed control, for example, controlling a braking pedal, an acceleration pedal, or a gear to control acceleration/deceleration, braking, or the like of the vehicle.

Regardless of which classification manner is used, the descriptions in embodiments of this application are applicable to the foregoing automated driving system that needs to partially or completely participate in vehicle driving.

Road structure cognition analyzes collected data from vehicle-mounted sensors in real time to complete reconstruction of road conditions surrounding an ego vehicle, which can greatly expand the application boundaries of advanced automated driving. Currently, a large quantity of solutions focus only on reconstruction of geometric information on the road. Over the past two years, some studies have started to focus on parsing lane topology, but few studies have paid attention to the further need to parse association relationships between various elements on the road. In addition, limited by detection accuracy of the geometric information, inference for the relationships between the road elements is difficult. Based on this, embodiments of this application provide a method for determining an association relationship between road elements, so that an association relationship between road elements can be obtained by performing processing based on road perception element information and road prior element information, to support road structure reconstruction. Road prior information is introduced, so that effect of relationship inference can be enhanced effectively.

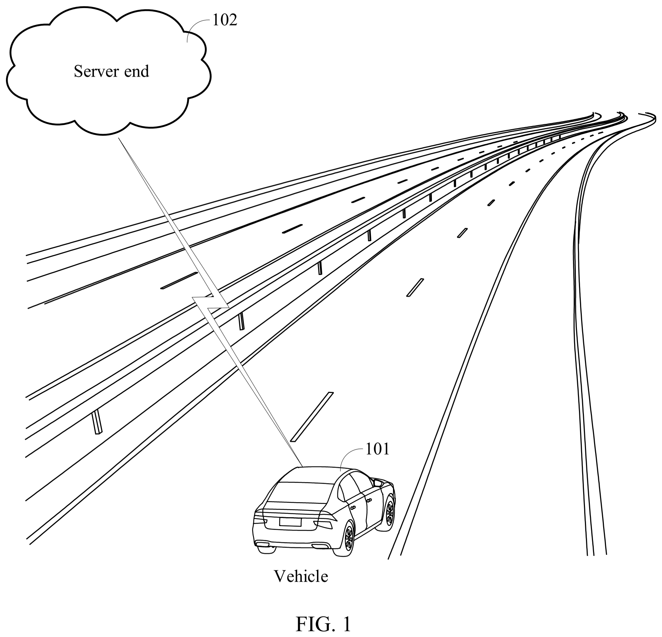

The following describes in detail a system architecture in embodiments of this application with reference to the accompanying drawings. FIG. 1 is a diagram of an architecture of a system for determining an association relationship between road elements to which an embodiment of this application is applicable. The system includes a vehicle 101 and a server end 102.

The vehicle 101 is an apparatus that has a communication capability and a computing capability, and can provide a mobile travel service for a user. The vehicle 101 can provide an environment in which software, hardware, or a module combining software and hardware is deployed.

The vehicle 101 in this embodiment of this application is an apparatus that moves through power driving. The vehicle 101 usually includes a plurality of subsystems, for example, including but not limited to a travel system, a sensor system, a control system, one or more peripheral devices, a power supply, a user interface, or the like. Optionally, the vehicle 101 may include more or less subsystems, and each subsystem may include a plurality of elements. In addition, each subsystem and element of the vehicle 101 may be interconnected in a wired or wireless manner.

It should be noted that the vehicle 101 in this embodiment of this application may be an automobile or an electric vehicle, or may be a vehicle running on a rail, or may be an intelligent vehicle (for example, an unmanned vehicle), an intelligent mobile robot, or the like.

The intelligent vehicle supports functions of sensing a road environment by using a vehicle-mounted sensing system, automatically planning a traveling route, and controlling the vehicle to arrive at a predetermined target location. The intelligent vehicle is integrated with technologies such as a computer, sensing, information fusion, communication, artificial intelligence, or automatic control, and is a high-tech complex integrated with functions such as environment sensing, planning and decision-making, and multi-level driver assistance. For example, the intelligent vehicle may be, for example, a vehicle or a wheeled mobile robot having an assisted driving system or a fully automated driving system.

The server end 102 is an apparatus having a centralized computing capability. For example, the server end 102 may be implemented by using an apparatus such as a server, a virtual machine, a cloud, a roadside apparatus, or a robot.

When the server end 102 includes the server, a type of the server includes but is not limited to a general-purpose computer, a dedicated server computer, a blade server, or the like. A quantity of servers included in the server end 102 is not strictly limited in this application, and there may be one or more servers (for example, a server cluster). In a possible implementation, there may be a communication connection between the server end 102 and the vehicle 101.

The virtual machine is a software-simulated computing module that has complete hardware system functions and that runs in an entirely isolated environment. Certainly, in addition to the virtual machine, the server end 102 may alternatively be implemented by using another computing instance, for example, a container.

The cloud is a software platform that uses an application virtualization technology, and can enable one or more pieces of software and applications to be developed and run in an independent virtualized environment. Optionally, when the server end 102 is implemented by using the cloud, the cloud may be deployed on a public cloud, a private cloud, a hybrid cloud, or the like.

The roadside apparatus is an apparatus disposed on a road side (or an intersection, a roadside, or the like). A road may be an outdoor road (for example, a main road, an auxiliary road, an elevated road, or a temporary road), or may be an indoor road (for example, a road in an indoor parking lot). The roadside apparatus can provide a service for the vehicle. It should be noted that the roadside apparatus may be an independent device, or may be integrated into another device. For example, the roadside apparatus may be integrated into a device such as a smart gas station, a charging pile, a smart signal light, a street lamp, a telegraph pole, or a traffic sign.

It should be noted that the system for determining an association relationship between road elements in this application may alternatively include only the vehicle 101, or include only the server end 102, or the like. This is not limited in this solution.

Embodiments of this application may be applied to the field of automated driving, for example, for an automated-driving vehicle-end system. The system for determining an association relationship between road elements may be carried in an automated driving system that does not rely on a high-definition map (High-definition map, HD map), and is used between an automated driving perception module and a regulation and control module, and the like. Embodiments of this application can also be used for map construction for automated driving. In map construction for automated driving, applying this solution can help associate new data with old data in self-sourcing and crowd-sourcing map construction. In addition, an association that is based only on the old data is avoided, which allows for better coping with impact of an outdated map version and a real-world change, and facilitates quick iteration of a map version. Certainly, embodiments of this application may alternatively be applied to another system. This is not limited in this solution.

The foregoing describes the architectures for embodiments of this application. The following describes methods in embodiments of this application in detail.

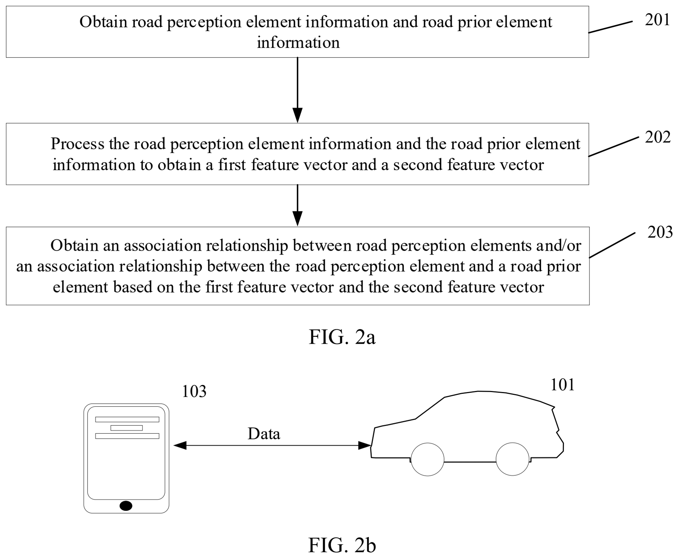

FIG. 2a is a schematic flowchart of a method for determining an association relationship between road elements according to an embodiment of this application. Optionally, the method may be applied to the foregoing system for determining an association relationship between road elements, for example, the system for determining an association relationship between road elements shown in FIG. 1. The method for determining an association relationship between road elements shown in FIG. 2a may include steps 201 to 203. It should be understood that, for ease of description in this application, a sequence of 201 to 203 is used for description, but this is not intended to limit execution necessarily performed in the sequence. An execution order, execution time, a quantity of execution times, and the like of the foregoing one or more steps are not limited in embodiments of this application. The following uses an example in which steps 201 to 203 in the method for determining an association relationship between road elements are performed by a vehicle for description. This application is also applicable to other execution bodies such as a server. Steps 201 to 203 are specifically as follows.

201: Obtain road perception element information and road prior element information.

The road perception element information may be understood as real-time information about elements such as a road. The road perception element information may include one or more of the following element information: a lane, a road, a traffic light, a road surface marking, a zebra crossing, a road boundary line, an intersection, a sign, and the like. Certainly, the road perception element information may alternatively be other element information. This is not limited in this solution.

The road prior element information may be understood as known information about elements such as a road.

In a possible implementation, a vehicle may obtain the road perception element information from, for example, sensors such as a roadside apparatus, a vehicle camera, a radar, and/or the like. The vehicle may obtain the road prior element information from, for example, a user input or a map (for example, a standard-definition map (Standard-definition map, SD map) or a navigation map). Certainly, there may alternatively be another way. This is not limited in this solution.

As shown in FIG. 2b, a vehicle 101 receives data from user equipment 103, and the data may be, for example, obtained based on information entered by a user. Then, the vehicle 101 obtains road perception element information and/or road prior element information based on the data.

The user equipment is a device that can interact with the user. The user equipment in embodiments of this application includes a handheld terminal, a wearable device, an entertainment device, or the like.

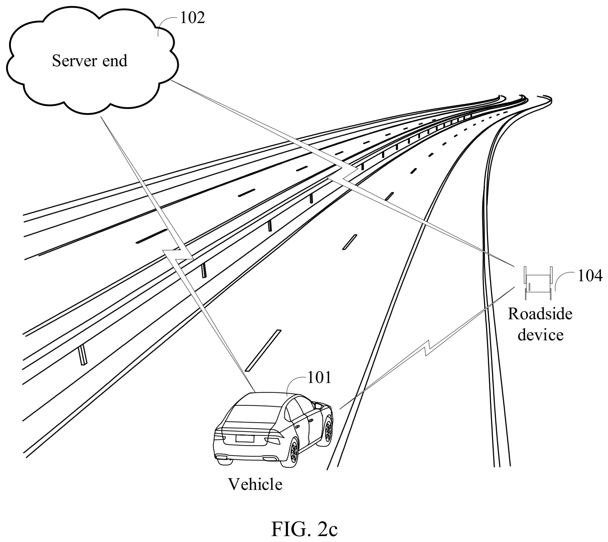

For another example, refer to FIG. 2c. The vehicle 101 receives data from a device associated with the vehicle 101. Then, the vehicle 101 obtains road perception element information and road prior element information based on the data.

The device associated with the vehicle is a device that can establish a communication connection to the vehicle 101, for example, a roadside device 104, an intersection radar, a base station that communicates with the vehicle, and a server that provides an intelligent driving strategy for the vehicle.

For example, road perception element information and road prior element information obtained from the roadside device 104 may be obtained by using another device. This is not specifically limited in this solution.

Optionally, the device associated with the vehicle may further include a vehicle-mounted perception device. The vehicle-mounted perception device may be, for example, one or more of the following: a vehicle-mounted camera, a millimeter-wave radar, a lidar, an ultrasonic radar, or the like. The vehicle may obtain data by using the vehicle-mounted perception device. Then, the vehicle obtains road perception element information based on the data. For example, the vehicle may perceive the road perception element information and the like by using the vehicle-mounted camera.

202: Process the road perception element information and the road prior element information to obtain a first feature vector and a second feature vector.

It may be understood that there may be one or more first feature vectors and second feature vectors. Preferably, there are a plurality of first feature vectors and a plurality of second feature vectors.

In a possible implementation, the first feature vector is a road perception element feature vector. The second feature vector is a road prior element feature vector.

For example, feature extraction is performed on the road perception element information to obtain the road perception element feature vector. Feature extraction is performed on the road prior element information to obtain the road prior element feature vector.

Optionally, the vehicle obtains the road perception element information from a perception module, and obtains the road prior element information from the navigation map. Further, the vehicle separately inputs the road perception element information and the road prior element information to a feature extraction model for processing, so that the road perception element feature vector and the road prior element feature vector can be obtained. For example, the feature extraction model may be a convolutional neural network, a fully connected neural network, or the like. It may be understood that the road perception element feature vector may include feature vectors respectively corresponding to a plurality of different pieces of road perception element information. Correspondingly, the road prior element feature vector may include feature vectors respectively corresponding to a plurality of different pieces of road prior element information.

Certainly, the processing process may alternatively be performed on a server end. This is not limited in this solution.

In another possible implementation, the first feature vector is a fused road perception element feature vector. The second feature vector is a fused road prior element feature vector.

The fused road perception element feature vector may be understood as a road perception element feature vector obtained by implicitly considering impact of the road prior element information. Certainly, the fused road perception element feature vector may further include fusion of the road perception element information, and the like. For example, a lane and a road surface arrow are fused to obtain lane information with a turn attribute.

Correspondingly, the fused road prior element feature vector may be understood as a road prior element feature vector obtained by implicitly considering impact of the road perception element information. Certainly, the fused road prior element feature vector may further include fusion of the road prior element information, and the like. This is not limited in this solution.

For example, a road perception element feature and a road prior element feature are obtained by performing feature interaction processing on the road perception element information and the road prior element information.

The feature interaction processing may be understood as that the road prior element information is also referred to in a process of performing feature extraction on the road perception element information, and correspondingly, the road perception element information is also referred to in a process of performing feature extraction on the road prior element information.

Optionally, both the road perception element information and the road prior element information are input to a neural network to perform multi-head attention mechanism processing, so that the fused road perception element feature vector and the fused road prior element feature vector can be obtained.

In this way, a more stable and more comprehensive lane feature can be obtained.

This solution may alternatively be implemented through rule constraint. A key feature of the road element is extracted based on a manually defined rule, a matching strategy is constructed to calculate the association relationship, and a final relationship is verified and output based on a rule transfer method. For example, one or more of the following is obtained: location information, category information, direction information, and attribute information of different elements in the road perception element information and the road prior element information. For a perception element, the attribute information may be perception confidence of the perception element. For map data, the attribute information may be construction time of the map data, and indicate an information update status and the like of the map data. This is not limited in this solution. Further, interactive fusion is performed on elements whose distances are less than a preset distance based on one or more of the following: the location information, the category information, the direction information, and the attribute information of the different elements, to obtain the fused road perception element feature vector and the fused road prior element feature vector. For example, interactive fusion is performed on a road surface marking feature and a lane feature to obtain a lane description with marking information. For another example, co-directional lanes are combined to form a road-level feature description.

The distance may be understood as a correlation degree indicated by the information, and is not only a geographical distance in a conventional sense or the like. In this example, the distance is used as a selection criterion. Certainly, interactive combination may alternatively be performed based on other information. For example, interactive fusion may be performed based on orientation information and the like of the element. For example, for an association between a lane and a traffic light, in addition to a distance, orientation information of the lane and the traffic light may also be used for determining. Certainly, another manner may alternatively be used. This is not limited in this solution.

The foregoing is merely an example, and another processing method may alternatively be used. This is not limited in this solution.

203: Obtain an association relationship between road perception elements and/or an association relationship between the road perception element and a road prior element based on the first feature vector and the second feature vector.

The association relationship between the road perception elements may be, for example, an association relationship between lanes, or an association relationship between a lane and a traffic light. The association relationship between the road perception element and the road prior element may be, for example, an association relationship between a lane and a road (SDRoad) from a road prior SD map.

The association relationship may include the following: There is a relationship, there is no relationship, or the like.

The following is for a case in which the first feature vector is a road perception element feature vector and the second feature vector is a road prior element feature vector.

For example, point multiplication is performed on any two road perception element feature vectors to obtain an association matrix (or another form in which an association relationship may be described, for example, a triplet) between the two road perception elements through calculation, that is, to obtain the association relationship between the two road perception elements. If a relationship location corresponding to the association matrix satisfies a threshold setting, there is an association relationship between the two road perception elements. If a relationship location corresponding to the association matrix does not satisfy a threshold setting, there is no association relationship between the two road perception elements.

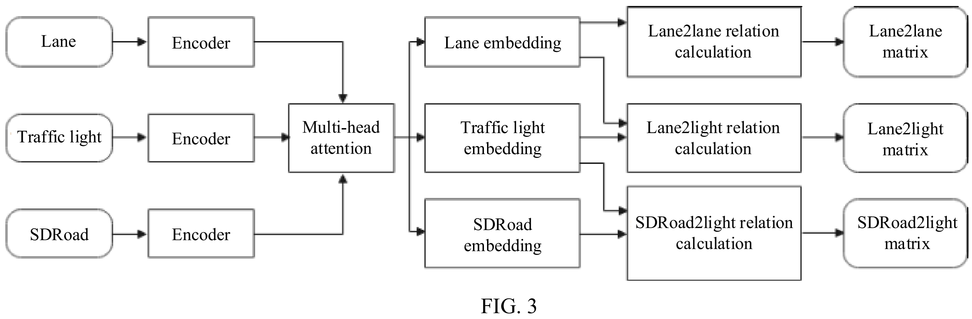

As shown in FIG. 3, a neural network is used to perform feature extraction on perceived lanes (lanes), traffic light (traffic light) information, and road (SDRoad) information from a road prior SD map, to obtain a road perception element feature vector and a road prior element feature vector. Then, point multiplication is separately performed on the feature vectors to obtain an association matrix between a lane (lane) and a lane (lane), an association matrix between the lane (lane) and a traffic light, and an association matrix between a road (SDRoad) and the traffic light (traffic light) through calculation, that is, to obtain association relationships corresponding to the lane and the lane, the lane and the traffic light, and the road (SDRoad) and the traffic light.

For another example, feature vectors of different elements may be further concatenated, and then categories of relationships between the different elements are decoded (for example, a multi-layer perceptron (Multi-Layer Perceptron, MLP) is used for a concatenated vector) to obtain the association relationship between the road perception elements, the association relationship between the road perception element and the road prior element, and the like. For example, if a decoding result satisfies a threshold, there is an association relationship between two road perception elements. If a decoding result does not satisfy a threshold, there is no association relationship between two road perception elements.

The following is for a case in which the first feature vector is a fused road perception element feature vector and the second feature vector is a fused road prior element feature vector.

In a possible implementation, a matching cost function is constructed based on the fused road perception element feature vector and the fused road prior element feature vector. The association relationship between the road perception elements and the association relationship between the road perception element and the road prior element are obtained based on the matching cost function. For example, the matching cost function may be a function constrained by the distance, an orientation, a category, and the like. This is not limited in this solution. If a constructed association relationship constraint is satisfied, there is a relationship between the elements. If a constructed association relationship constraint is not satisfied, there is no relationship between the elements. For example, a matching cost function is constructed based on various obtained road perception element information, road prior element information, fused road perception element feature vectors, and fused road prior element feature vectors, to determine an association relationship between perception elements and an association relationship between the perception element and prior information based on the matching cost function. For example, to associate a perceived lane with a road from an SD map, the perceived lane and the road from the SD map need to be close in geometric locations and indicate similar traveling directions. For another example, to associate a perceived lane with a perceived traffic light, a traveling direction of the perceived lane needs to point toward a location of the traffic light, and the traffic light needs to face the lane. Further, the foregoing plurality of relationships may be verified or fused according to a downstream task requirement, and finally output.

In another possible implementation, fused feature vectors of different elements may be concatenated, and then categories of relationships between the different elements are decoded to obtain the association relationship between the road perception elements, the association relationship between the road perception element and the road prior element, and the like. For the description of this part, refer to the foregoing description. Details are not described herein again.

Based on the foregoing manner, the association relationship between the road perception elements and the association relationship between the road perception element and the road prior element may be obtained, and an association relationship between road prior elements and the like may be further obtained.

Based on the association relationship between the elements, a redundant relationship may be further verified or filtered.

For example, a verification function may be constructed based on multi-frame time sequence information, to verify the association relationship. For example, for multi-frame data, a relationship between same elements is tracked. If there is an association relationship between a plurality of frames in a time window, it may be considered that there is an association relationship.

In a possible implementation, a redundant association relationship between the road perception elements is combined or deleted based on the association relationship between the road perception elements to obtain a processed association relationship between the road perception elements.

A redundant association relationship between the road perception element and the road prior element is combined or deleted based on the association relationship between the road perception element and the road prior element to obtain a processed association relationship between the road perception element and the road prior element.

The foregoing combination may mean, for example, transferring and combining related element relationships. For example, a relationship between a perceived traffic light and a perceived road, a relationship between the perceived traffic light and a prior road, and a relationship between the perceived road and the prior road are integrated to obtain a final relationship between the traffic light and the perceived road. The foregoing deletion may mean deleting a repeated association relationship, for example, may mean analog combination, or deleting an auxiliary relationship. For example, if a focus is on the relationship between the traffic light and the perceived road, the relationship between the perceived road and the prior road and the relationship between the perceived traffic light and the prior road may be deleted, or the like.

Certainly, the foregoing plurality of relationships may be verified or fused according to a downstream task requirement, and finally output. For example, a part of an association relationship between a perceived lane and a perceived traffic light may be obtained through inference based on an association between the perceived lane and a road from an SD map and an association between the perceived traffic light and the SD map, so that an association relationship, between the perceived lane and the perceived traffic light, obtained through direct inference can be verified or supplemented.

In this way, the association relationship between the road perception elements and the association relationship between the road perception element and the road prior element can be simplified, so that an obtained association relationship result is clearer, more concise, and more accurate.

The association relationship between the elements may be displayed on an interface of a display device in the vehicle, a human-computer interaction interface, or the like. Certainly, another manner may alternatively be used. This is not limited in this solution.

In this embodiment of this application, the road perception element information and the road prior element information is processed to obtain the first feature vector and the second feature vector, and then the association relationship between the road perception elements and/or the association relationship between the road perception element and the road prior element are/is obtained based on the first feature vector and the second feature vector. In this manner, a current road element is associated with road prior information, so that the road prior information can serve as a bridge to improve a current road element relationship inference level. In addition, the redundant relationship can be constructed through inference of a relationship between the current road element and prior road information, to facilitate verification of a current road element relationship, thereby enhancing robustness and interpretability of the overall solution.

This solution does not strongly rely on the road prior information for relationship inference. According to a requirement, a final output may be only an association between current road elements, to avoid adverse impact caused by outdated road prior information.

It should be noted that, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The methods in embodiments of this application are described in detail above, and apparatuses in embodiments of this application are provided below. It may be understood that, in apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may alternatively be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus for implementing any one of the foregoing methods. For example, an apparatus for determining an association relationship between road elements is provided, including modules (or means) configured to implement steps performed by a vehicle in any one of the foregoing methods.

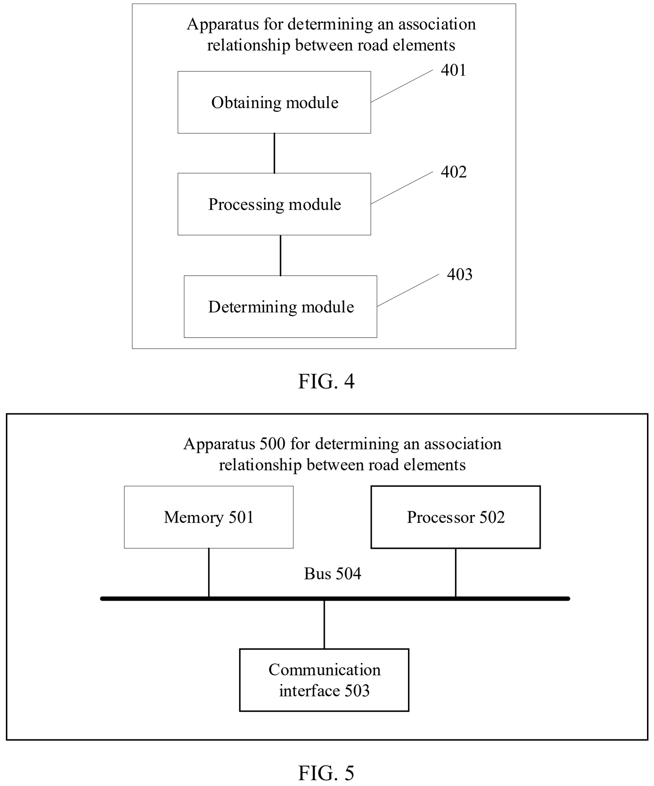

For example, FIG. 4 is a diagram of a structure of an apparatus for determining an association relationship between road elements according to an embodiment of this application. The apparatus for determining an association relationship between road elements is configured to implement the foregoing method for determining an association relationship between road elements, for example, the method for determining an association relationship between road elements shown in FIG. 2a and FIG. 3.

As shown in FIG. 4, the apparatus may include an obtaining module 401, a processing module 402, and a determining module 403. Details are described as follows.

The obtaining module 401 is configured to obtain road perception element information and road prior element information.

The processing module 402 is configured to process the road perception element information and the road prior element information to obtain a first feature vector and a second feature vector.

The determining module 403 is configured to obtain an association relationship between road perception elements and/or an association relationship between the road perception element and a road prior element based on the first feature vector and the second feature vector.

In a possible implementation, the processing module 402 is configured to:
separately perform feature extraction on the road perception element information and the road prior element information to obtain the first feature vector and the second feature vector, where the first feature vector is a road perception element feature vector, and the second feature vector is a road prior element feature vector.

In another possible implementation, the processing module 402 is further configured to:
perform feature interaction processing on the road perception element information and the road prior element information to obtain the first feature vector and the second feature vector, where the first feature vector is a fused road perception element feature vector, and the second feature vector is a fused road prior element feature vector.

In a possible implementation, the processing module 402 is further configured to:
perform multi-head attention mechanism processing on the road perception element information and the road prior element information to obtain the fused road perception element feature vector and the fused road prior element feature vector.

In another possible implementation, the processing module 402 is further configured to:
perform interactive fusion on elements whose distances are less than a preset distance based on at least one of location information, category information, direction information, and attribute information of different elements in the road perception element information and the road prior element information to obtain the fused road perception element feature vector and the fused road prior element feature vector.

In a possible implementation, the processing module 402 is further configured to:
construct a matching cost function based on the fused road perception element feature vector and the fused road prior element feature vector; and
obtain the association relationship between the road perception elements and/or the association relationship between the road perception element and the road prior element based on the matching cost function.

In a possible implementation, the determining module 403 is further configured to:
combine and/or delete a redundant association relationship between the road perception elements to obtain a processed association relationship between the road perception elements; and
combine and/or delete a redundant association relationship between the road perception element and the road prior element to obtain a processed association relationship between the road perception element and the road prior element.

For descriptions of the foregoing modules, refer to the descriptions of the foregoing method embodiments. Details are not described herein again.

It should be understood that division into the modules in the foregoing apparatuses is merely logical function division. During actual implementation, all or some of the modules may be integrated into one physical entity, or may be physically separated. In addition, the module in the apparatus for determining an association relationship between road elements may be implemented in a form of software invoked by a processor. For example, the apparatus for determining an association relationship between road elements includes the processor, the processor is connected to a memory, the memory stores instructions, and the processor invokes the instructions stored in the memory, to implement any one of the foregoing methods or implement functions of the modules in the apparatus. The processor is, for example, a general-purpose processor, for example, a central processing unit (central processing unit, CPU) or a microprocessor, and the memory is a memory in the apparatus or a memory outside the apparatus. Alternatively, the module in the apparatus may be implemented in a form of hardware circuit, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All the modules in the apparatus may be implemented in a form of software invoked by a processor, or all the modules may be implemented in a form of hardware circuit, or some modules may be implemented in a form of software invoked by a processor, and a remaining part may be implemented in a form of hardware circuit.

FIG. 5 is a diagram of a hardware structure of another apparatus for determining an association relationship between road elements according to an embodiment of this application. The apparatus 500 for determining an association relationship between road elements shown in FIG. 5 (where the apparatus 500 may be specifically a computer device) includes a memory 501, a processor 502, a communication interface 503, and a bus 504. A communication connection among the memory 501, the processor 502, and the communication interface 503 is implemented through the bus 504.

The memory 501 may be a read-only memory (read-only memory, ROM), a static storage device, a dynamic storage device, or a random access memory (random access memory, RAM).

The memory 501 may store a program. When the program stored in the memory 501 is executed by the processor 502, the processor 502 and the communication interface 503 are configured to perform the steps of the method for determining an association relationship between road elements in embodiments of this application.

The processor 502 is a circuit having a signal processing capability. In an implementation, the processor 502 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 502 may implement a specific function based on a logical relationship of a hardware circuit, and the logical relationship of the hardware circuit is fixed or reconfigurable. For example, the processor 502 is a hardware circuit implemented by an ASIC or a programmable logic device PLD, for example, an FPGA. In a reconfigurable hardware circuit, a process in which the processor loads a configuration document to implement hardware circuit configuration may be understood as a process in which the processor loads instructions to implement functions of some or all of the foregoing modules. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 502 is configured to execute a related program, to implement functions that need to be performed by the units in the apparatus for determining an association relationship between road elements in embodiments of this application, or perform the method for determining an association relationship between road elements in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules in the foregoing apparatus may be integrated, or may be independently implemented. In an implementation, the modules are integrated and implemented in a form of system-on-a-chip (system-on-a-chip, SOC). The SOC may include at least one processor configured to implement any one of the foregoing methods or implement functions of the modules of the apparatus. Types of the at least one processor may be different, including, for example, a CPU and an FPGA, a CPU and an artificial intelligence processor, and a CPU and a GPU.

The communication interface 503 uses a transceiver apparatus, for example, but not limited to, a transceiver, to implement communication between the apparatus 500 and another device or a communication network. For example, data may be obtained through the communication interface 503.

The bus 504 may include a path for transferring information between the components (for example, the memory 501, the processor 502, and the communication interface 503) of the apparatus 500.

It should be noted that although the apparatus 500 shown in FIG. 5 only shows the memory, the processor, and the communication interface, in a specific implementation process, a person skilled in the art should understand that the apparatus 500 further includes other components that are necessary to implement normal running. In addition, according to a specific requirement, a person skilled in the art should understand that the apparatus 500 may further include hardware components for implementing other additional functions. In addition, a person skilled in the art should understand that the apparatus 500 may alternatively include only components necessary for implementing embodiments of this application, but does not need to include all the components shown in FIG. 5.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected according to actual requirements to achieve the objectives of the solutions of embodiments.

All or some of the foregoing embodiments may be implemented by using software, hardware, firmware, or any combination thereof. When software is used to implement embodiments, all or some of the embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for determining an association relationship between road elements, comprising:
obtaining road perception element information and road prior element information;
processing the road perception element information and the road prior element information to obtain a first feature vector and a second feature vector; and
obtaining an association relationship between road perception elements and/or an association relationship between the road perception element and a road prior element based on the first feature vector and the second feature vector.

2. The method according to claim 1, wherein processing the road perception element information and the road prior element information to obtain the first feature vector and the second feature vector comprises:
separately performing feature extraction on the road perception element information and the road prior element information to obtain the first feature vector and the second feature vector, wherein the first feature vector is a road perception element feature vector, and the second feature vector is a road prior element feature vector.

3. The method according to claim 1, wherein processing the road perception element information and the road prior element information to obtain the first feature vector and the second feature vector comprises:
performing feature interaction processing on the road perception element information and the road prior element information to obtain the first feature vector and the second feature vector, wherein the first feature vector is a fused road perception element feature vector, and the second feature vector is a fused road prior element feature vector.

4. The method according to claim 3, wherein performing feature interaction processing on the road perception element information and the road prior element information to obtain the first feature vector and the second feature vector comprises:
performing multi-head attention mechanism processing on the road perception element information and the road prior element information to obtain the fused road perception element feature vector and the fused road prior element feature vector.

5. The method according to claim 3, wherein performing feature interaction processing on the road perception element information and the road prior element information to obtain the first feature vector and the second feature vector comprises:
performing interactive fusion on elements whose distances are less than a preset distance based on at least one of location information, category information, direction information, and attribute information of different elements in the road perception element information and the road prior element information to obtain the fused road perception element feature vector and the fused road prior element feature vector.

6. The method according to claim 5, wherein obtaining the association relationship between the road perception elements and/or the association relationship between the road perception element and the road prior element based on the first feature vector and the second feature vector comprises:
constructing a matching cost function based on the fused road perception element feature vector and the fused road prior element feature vector; and
obtaining the association relationship between the road perception elements and/or the association relationship between the road perception element and the road prior element based on the matching cost function.

7. The method according to any one of claims 1 to 6, wherein the method further comprises:
combining and/or deleting a redundant association relationship between the road perception elements to obtain a processed association relationship between the road perception elements; and
combining and/or deleting a redundant association relationship between the road perception element and the road prior element to obtain a processed association relationship between the road perception element and the road prior element.

8. An apparatus for determining an association relationship between road elements, comprising:
an obtaining module, configured to obtain road perception element information and road prior element information;
a processing module, configured to process the road perception element information and the road prior element information to obtain a first feature vector and a second feature vector; and
a determining module, configured to obtain an association relationship between road perception elements and/or an association relationship between the road perception element and a road prior element based on the first feature vector and the second feature vector.

9. The apparatus according to claim 8, wherein the processing module is further configured to:
separately perform feature extraction on the road perception element information and the road prior element information to obtain the first feature vector and the second feature vector, wherein the first feature vector is a road perception element feature vector, and the second feature vector is a road prior element feature vector.

10. The apparatus according to claim 8, wherein the processing module is configured to:
perform feature interaction processing on the road perception element information and the road prior element information to obtain the first feature vector and the second feature vector, wherein the first feature vector is a fused road perception element feature vector, and the second feature vector is a fused road prior element feature vector.

11. The apparatus according to claim 10, wherein the processing module is further configured to:
perform multi-head attention mechanism processing on the road perception element information and the road prior element information to obtain the fused road perception element feature vector and the fused road prior element feature vector.

12. The apparatus according to claim 10, wherein the processing module is further configured to:
perform interactive fusion on elements whose distances are less than a preset distance based on at least one of location information, category information, direction information, and attribute information of different elements in the road perception element information and the road prior element information to obtain the fused road perception element feature vector and the fused road prior element feature vector.

13. The apparatus according to claim 12, wherein the processing module is configured to:
construct a matching cost function based on the fused road perception element feature vector and the fused road prior element feature vector; and
obtain the association relationship between the road perception elements and/or the association relationship between the road perception element and the road prior element based on the matching cost function.

14. The apparatus according to any one of claims 8 to 13, wherein the determining module is further configured to:
combine and/or delete a redundant association relationship between the road perception elements to obtain a processed association relationship between the road perception elements; and
combine and/or delete a redundant association relationship between the road perception element and the road prior element to obtain a processed association relationship between the road perception element and the road prior element.

15. An apparatus for determining an association relationship between road elements, comprising a processor and a memory, wherein the memory is configured to store program code, and the processor is configured to invoke the program code to perform the method according to any one of claims 1 to 7.

16. A computer-readable storage medium, wherein the computer-readable storage medium stores a computer program, and the computer program is executed by a processor to perform the method according to any one of claims 1 to 7.

17. A computer program product, wherein when the computer program product runs on a computer, the computer is enabled to perform the method according to any one of claims 1 to 7.

18. A vehicle, wherein the vehicle comprises the apparatus according to any one of claims 8 to 14.
